# EUROPEAN PATENT SPECIFICATION

(11) **EP 0 419 455 B1**
(45) Date of publication and mention of the grant of the patent: **17.03.1993**
(21) Application number: 88905370.8
(22) Date of filing: 09.06.1988
(51) Int. Cl.: B60R 21/00

(54) **APPARATUS AND METHOD FOR TRIPPING A SAFETY SYSTEM FOR THE PROTECTION OF AN OCCUPANT OF A VEHICLE**
VORRICHTUNG UND VERFAHREN ZUR AUSLÖSUNG EINES SICHERHEITSSYSTEMS ZUM SCHUTZ VON KRAFTFAHRZEUGINSASSEN
APPAREIL ET PROCEDE DE DECLENCHEMENT D'UN SYSTEME DE SECURITE POUR LA PROTECTION D'UN OCCUPANT D'UN VEHICULE

(43) Date of publication of application: 03.04.1991
(73) Proprietor: ROBERT BOSCH GMBH, 70442 Stuttgart (DE)
(72) Inventor: JEENICKE, Edmund, D-7141 Schwieberdingen (DE); MATTES, Bernhard, D-7123 Sachsenheim 1 (DE); CONDNE, Claus, D-6633 Wadgassen (DE)
(86) International application number: EP8800508
(87) International publication number: WO8911986

(56) References cited:
- EP-A- 0 167 792
- DE-A- 2 920 147
- US-A- 4 166 641

## Description

### State of the Art

The present invention relates to an apparatus and method for actuating safety systems for the protection of an occupant of a vehicle, of the type described in the precharacterising portions of claims 1, 2 and 6, respectively.

In DE-A1-2 920 147 a safety system for the protection of an occupant of a vehicle is described. The system comprises an acceleration sensor consisting of a movable mass and two magnetic circuits which can be influenced by this movable mass. The two magnetic circuits each comprise a core with a winding on it. Movements of the movable mass generate a voltage across the windings, which is amplified and evaluated in following electronic stages. There are two electronic stages in parallel. The first stage comprises an integrator circuit followed by a level detector circuit and an output stage. The second stage comprises in parallel a direction discriminating circuit and an amplitude discriminating circuit whose output signals are combined within a digital AND-circuit. The output of the AND-circuit influences the integrator circuit of the first electronic stage.

The signals from the sensors may be processed by analog systems or by digital systems. Analog processing has the advantage of rapid and reasonably accurate processing of the signals, and thus has the advantage of speed over digital systems (which require computer processing) in the event of a very violent impact.

On the other hand, computer processing makes it possible to utilise more expensive and more accurate evaluation methods, but has the disadvantages of increased cost and increased processing time. The latter disadvantage must particularly be taken into consideration since it is necessary to detect an acceleration for which actuating is required as soon as possible.

It is an object of the present invention to provide an apparatus and method for actuating the safety system, which utilises as far as possible the advantages of both analog and digital processing.

### Advantages of the Invention

The above object is achieved by adoptinng the features set forth in claims 1 and 9. This has the advantage of utilising both the rapid reaction time of analogue processing and the accuracy of digital processing.

Further advantages are obtained by the features of claims 2 to 8.

### Drawings

By way of example only, specific embodiments of the present invention will now be described, with reference to the accompanying drawings, in which:-
Fig. 1 is a diagrammatic representation of a first embodiment of device for tripping safety systems, in accordance with the present invention; and
Fig. 2 is a diagrammatic representation of a second embodiment of device for tripping safety systems, in accordance with the present invention.

### Description of Exemplary Examples

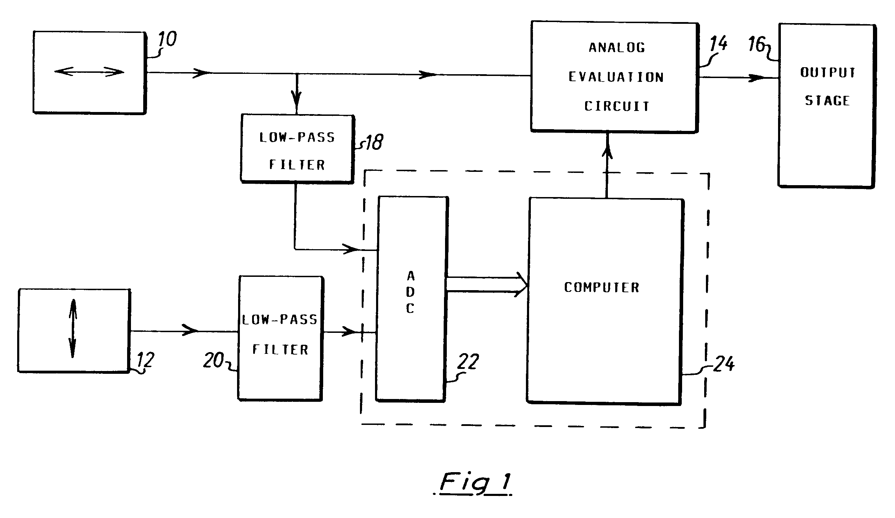

Referring firstly to Fig. 1, the device comprises a longitudinal acceleration sensor 10, for detecting the acceleration of the vehicle in a direction parallel to the forward direction of motion of the vehicle, and a transverse acceleration sensor 12, for detecting the acceleration of the vehicle in an axis substantially perpendicular to the aforementioned axis (hereinafter referred to as the transverse direction). The analog output of the longitudinal acceleration sensor 10 is fed to an analog evaluation circuit 14 which evaluates the main acceleration signal (in the direction of forward travel of the vehicle) by known methods. If the evaluation circuit 14 determines that the acceleration in the longitudinal direction is greater than a predetermined value, then an actuating signal is fed to an output stage 16 which in turn trips the safety system (for example an inflatable airbag).

In this way, when the longitudinal acceleration is above a certain threshold value, the safety device is actuated.

The output of each of the sensors 10, 12 is fed to a respective low-pass filter 18, 20. The limiting frequency of the low-pass filters is chosen such that it does not serve solely for the evaluation of the acceleration signal. Only the higher frequencies which contain more accurate information (which is not ascertainable from the analog signal) are integrated. Pre-processing is thus achieved in a desired manner, with the resultant advantage that the signal scan frequency can be reduced, and more time-consuming computing algorithms can be used for the subsequent evaluation of the two signals.

The output from both of the low-pass filters 18, 20 is fed to an analog to digital converter 22, wherein the signals are converted to digital signals. The now digital signals are then fed into a digital computer 24, which evaluates the acceleration signals from the sensors 10, 12 digitally.

The process evaluation is then fed to the analog evaluation circuit 14 via a digital to analog converter (DAC) (not illustrated). Depending upon the evaluations made by the computer 24, the analog evaluation circuit 14 may determine that a signal ought to be sent to the output stage 16, even if the value of the longitudinal acceleration is not sufficient by itself for the safety device to be triggered. For example, the relative values of the longitudinal and transverse acceleration of the vehicle, as evaluated digitally in the computer 24 may be such that the overall acceleration is sufficiently large to warrant tripping of the safety device. This may occur, for example, in an oblique impact, where the longitudinal acceleration itself may not be sufficient to trip the safety device, but the magnitude of the acceleration in total is such that actuation of the safety device is desirable.

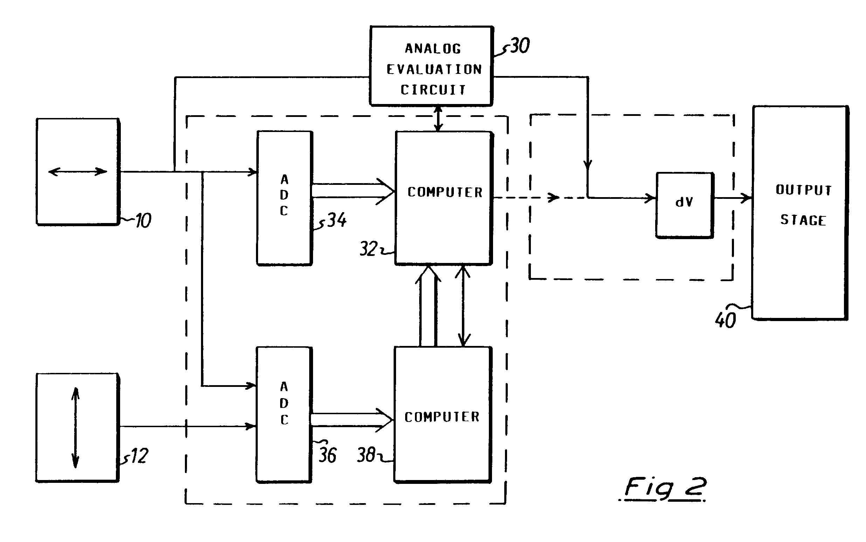

The second embodiment of the present invention is illustrated in Fig. 2. Longitudinal and transverse acceleration sensors 10, 12 are provided, as in the first embodiment.

The output from the longitudinal acceleration sensor is fed into an analog evaluation circuit 30. The output of the analog evaluation circuit 30 is fed firstly to a tripping threshold switch dV, and secondly via a low-pass filter and ADC (not illustrated) to a first computer 32 of the digital processing system.

The output of the longitudinal acceleration sensor 10 is also fed via a low-pass filter (not illustrated) to an ADC 34, and thence into the first computer 32. The outputs of the longitudinal and the transverse sensors 10, 12, after passing through respective low-pass filters (not illustrated) are fed into a second ADC 36, and thence into a second computer 38.

The digital circuitry thus calculates the longitudinal acceleration digitally in the computer 32. The longitudinal and transverse accelerations are also compared in the second computer 38, and this information is fed into the first computer 32. The output of the computer 32 is fed to the tripping threshold switch dV, which actuates an output stage 40 to trip the vehicle safety device if a suitable signal is fed therein.

Triggering of the safety system can occur in one of three general ways. Firstly, either the signal of the analog channel or the longitudinal signal of the digital channel can determine that a threshold acceleration has been reached, and a suitable signal is sent to the threshold switch dV which operates to actuate the safety device. In this situation, it will normally be the analog channel which produces its signal first of all, due to its faster processing. However, in borderline cases the analog channel may not be sufficiently accurate to determine that a threshold acceleration has been reached, whereas the more accurate digital channel is capable of doing so. Thus, in certain borderline cases it may be the digital channel which triggers the actuation of the safety device, albeit slightly later than would have occurred for the analog channel.

Secondly, the digital processor may reach a tripping threshold by itself, the analog channel signal not reaching the longitudinal acceleration threshold. This may occur, for example, in an oblique impact, where a significant acceleration is experienced by the vehicle in the transverse direction. In this case neither the analog processing circuitry 30 nor the first computer 32 would detect a longitudinal acceleration threshold, but the second computer 38, on comparing the longitudinal and transverse accelerations, would inform the computer 32 that actuation of the safety device is warranted and the computer 32 would output a suitable signal to the threshold switch dV accordingly. In this second case, the threshold switch dV is preferably arranged to provide a tripping signal from the digital circuitry, only if a signal from the analog channel is also received. Such a signal from the analog channel indicates that there is a component of the vehicle acceleration in the longitudinal direction, and this provision helps to ensure against the possibility of incorrect calculation by one of the computers 32, 34, and subsequent incorrect tripping. A predetermined value of the longitudinal acceleration calculated by the analog circuit is preferably specified in this case.

The third case is that the tripping threshold switch dV is actuated only by the analog channel, but the connection between the computer 32 of the digital circuitry and the analog evaluation circuitry 30 allows the digitally-calculated signals to influence the evaluation carried out by the analog evaluation circuit 30. This is why the connection between the computer 32 and the tripping threshold switch dV has been dotted, since in this case there would be no direct connection from the computer 32 (or, indeed, any of the digital circuitry) and the tripping threshold switch dV. In this case, the tripping threshold switch dV can be actuated only by the analog evaluation circuitry 30, but the analogue circuit 30 can, in turn, be influenced by the digital circuits. For example, the analog circuit may calculate that the longitudinal acceleration is not of sufficient value to initiate tripping of the safety device. However, the digital circuitry may calculate that the overall acceleration (or, for example, the relative longitudinal and transverse accelerations) is of sufficient value to warrant actuation of the safety device. in this case, the information from the digital circuitry would be fed into the analog circuit 30 and the analog circuit, depending on the information fed into it from the digital circuitry, would send a suitable actuation signal to the tripping threshold switch dV.

The present invention is suitable in all types of impact as follows.

### 1. Rapid Frontal Impact

The characteristic of such an impact is a very rapid and high increase in the tripping signal. Such an impact requires rapid evaluation of the longitudinal acceleration. This can be achieved either by taking the analog signal directly, or by processing the acceleration in the computer 32 and merely having the analog signal as a "confirmation" or back-up signal. As stated previously, the latter situation might be of benefit if the value of the acceleration was a borderline case.

### 2. Slow Frontal Impact

This type of impact has a rapid but small increase in the tripping signal. The requirement is for rapid and accurate evaluation of the longitudinal acceleration. This is preferably achieved by processing in the computer 32, provided that the additional analog tripping circuit 30 reaches the low threshold described previously. A further check on the plausibility of the calculated signal may be made by the computer 38, which calculates the values of the longitudinal and transverse accelerations and feeds this information into the computer 32.

### 3. Oblique Impact (e.g. 30^{o})

This type of impact has a slow and variable increase in the longitudinal tripping threshold signal, less in the initial phase than in the case of a slow frontal impact. Relatively slow but accurate evaluation of the acceleration is required. This is achieved by computer 32 (provided the additional analogue tripping circuit reaches the low threshold) to evaluate the longitudinal signal, and computer 38 which is used to calculate the transverse signal, and feed this information to computer 32.

### 4. Rear Impact

This type of impact has a increase in the tripping signal in a negative direction, and an increase in a positive direction at the end of the crash (high-pass behaviour). No tripping is desired in such an impact, and this is achieved by the computer 32 being able to integrate in both directions.

### 5. Side Impact

Such an impact has a characteristic with a large transverse signal. No tripping of the safety system is desirable or required in such an impact. This is achieved by computer 38 which blocks computer 32, since the ratio of the longitudinal and transverse accelerations is not within the actuation threshold. Even if computer 38 gave a false signal, there would still be the emergency longitudinal back-up provided by the analog circuit 30.

The present invention is particularly suitable for safety devices such as inflatable airbags and the actuation (i.e. locking) of seatbelts. However, it may also be used to actuate flashing warning light systems, unlock the doors centrally, or other safety features.

## Claims

1. A device for actuating a safety system for the protection of an occupant of a vehicle, comprising a first acceleration sensor (10) for sensing the acceleration of the vehicle along a first axis, a second sensor (12) for sensing the acceleration of the vehicle along an axis inclined to the said first axis, and an analog evaluation circuit (14) for evaluating the signal from the first longitudinal acceleration sensor (10) in an analog manner, characterized by a digital computer (24) for evaluating the signal from the first longitudinal acceleration sensor (10) and the second transverse acceleration sensor (12) digitally, the safety system being actuated in dependence upon the value of the analog signal generated as output of that analog evaluation circuit (14), wherein the digital calculation influences the evaluation process of the analog calculation in the analog evaluation circuit (14) to actuate the safety system even if the value of the longitudinal acceleration is not sufficient by itself for the safety device to be actuated.

2. A device for actuating a safety system for the protection of an occupant of a vehicle, comprising a first acceleration sensor (10) for sensing the acceleration of the vehicle along a first axis, and a second sensor (12) for sensing the acceleration of the vehicle along an axis inclined to the said first axis and an analog evaluation circuit (30) for evaluating the signal from the first longitudinal acceleration sensor (10) in an analog manner and producing an analog output signal for actuation of the safety system, characterised by additionally providing a first digital computer (32) for evaluating also the signal from the first longitudinal sensor (10) digitally and producing a digital output signal, an actuating threshold switch (dV) connected to the outputs of the analog evaluation circuit (30) and the first computer (32), the safety system being also actuated if the said digital or analog signal, evaluated in the analog circuit (30) with the influence of the digital calculation in the first computer (32), has reached a threshold acceleration of the threshold switch (dV).

3. A device for actuating a safety system as claimed in claim 2, wherehin the safety system is actuated in dependence upon the signal of the transverse acceleration sensor (12) and in dependence upon the comparison of the longitudinal and transverse accelerations by a second digital computer (38) for evaluating the signal from the first longitudinal sensor (10) and the second transverse sensor (12) digitally even if the output of the analog evaluation circuit (30) is below the acceleration threshold of the actuating threshold switch (dV).

4. A device as claimed in any of the preceding claims, wherehin the acceleration signal of each sensor (10, 12) is fed into the digital calculation means (24, 32, 38) via at least one low-pass filter (18, 20).

5. A device as claimed in any of the preceding claims, wherehin the first and second axis are substantially perpendicular to each other.

6. A method of actuating safety systems for the protection of an occupant of a vehicle, using apparatus as claimed in any of the claims 1 to 5, comprising detecting the acceleration of the vehicle along a first axis with a first sensor, substantially parallel to the forward direction of motion of the vehicle, detecting with a second sensor the acceleration of the vehicle along a second axis inclined to the said first axis and an analog evaluation of the signal from the first longitudinal acceleration sensor in an analog manner, characterised by evaluation of the signals from the first and second sensor digitally, the safety system being actuated in combined dependence upon the values of the analog and digital evaluated signals.

## Patentansprüche

1. Vorrichtung zur Auslösung eines Sicherheitssystems zum Schutz von Fahrzeuginsassen mit einem ersten Beschleunigungssensor (10) für das Erfassen der Beschleunigung des Fahrzeugs entlang einer ersten Achse, einem zweiten Sensor (12) zur Erfassung der Beschleunigung des Fahrzeugs entlang einer zu der genannten ersten Achse geneigten Achse, einer analogen Auswertungsschaltung (14) für die Auswertung des Signals des ersten longitudinalen Beschleunigungssensors (10) auf analoge Weise, gekennzeichnet durch einen Digitalrechner (24) für die Auswertung des Signals des ersten longitudinalen Beschleunigungssensors (10) und zweiten transversalen Beschleunigungssensors (12) auf digitale Weise, wobei das Sicherheitssystem in Abhängigkeit von dem Wert eines analogen Signals ausgelöst wird, das als Ausgangssignal der analogen Auswertungsschaltung (14) erzeugt wird, wobei die digitale Berechnung den Auswertungsevorgang der analogen Berechnung in der analogen Auswertungsschaltung (14) beeinflußt, um das Sicherheitssystem auch dann auszulösen, wenn der Wert der longitudinalen Beschleunigung für sich genommen nicht ausreichend ist, um das Sicherheitssystem zu betätigen.

2. Vorrichtung zur Auslösung eines Sicherheitssystems zum Schutz eines Fahrzeuginsassen, die einen ersten Beschleunigungssensor (10) für das Erfassen der Beschleunigung des Fahrzeugs entlang einer ersten Achse umfaßt und einen zweiten Sensor (12) für das Erfassen der Beschleunigung des Fahrzeugs entlang einer zweiten, zu der genannten ersten Achse geneigten Achse, und eine analoge Auswertungsschaltung (30) für die Auswertung des Signals des ersten longitudinalen Beschleunigungssensors (10) in einer analogen Weise und zur Erzeugung eines analogen Ausgangssignals für die Auslösung des Sicherheitssystems, dadurch gekennzeichnet, daß zusätzlich ein erster Digitalrechner (32) vorgesehen ist für die Bewertung des Signals des ersten longitudinalen Beschleunigungssensors (10) auf digitale Weise und für die Erzeugung eines digitalen Ausgangssignals, und daß weiter ein Auslöseschwellwertschalter (dV) vorgesehen ist, der mit den Ausgangsanschlüssen der analogen Auswertungsschaltung (30) und des ersten Rechners (32) verbunden ist, und wobei das Sicherheitssystem auch dann ausgelöst wird, wenn das erwähnte digitale oder analoge Signal, das in der analogen Auswertungsschaltung (30) unter dem Einfluß der digitalen Berechnung in dem ersten Rechner (32) ausgewertet wird, einen Beschleunigungsschwellwert des Schwellwertschalters (dV) erreicht hat.

3. Vorrichtung zur Auslösung eines Sicherheitssystems nach Anspruch 2, in dem das Sicherheitssystem in Abhängigkeit von dem Signal des transversalen Beschleunigungssensors (12) und in Abhängigkeit von dem Vergleich des longitudinalen und transversalen Beschleunigungssignals durch einen zweiten digitalen Rechner (38) zur Bewertung des Signals von dem ersten longitudinalen Beschleunigungssensor (10) und dem zweiten transversalen Beschleunigungssensor (12) auf digitale Weise auch dann ausgelöst wird, wenn der Ausgang der analogen Auswertungsschaltung (30) unterhalb des Beschleunigungsschwellwertes des Auslöseschwellwertschalters (dV) ist.

4. Vorrichtung nach einem der vorhergehenden Ansprüche, in der das Beschleunigungssignal jedes Sensors (10, 12) digitalen Rechenmitteln (24, 32, 38) über mindestens einen Tiefpaßfilter (18, 20) zugeführt ist.

5. Vorrichtung nach einem der vorhergehenden Ansprüche, in der die erste und zweite Achse im wesentlichen senkrecht zueinander sind.

6. Verfahren zur Auslösung eines Sicherheitssystems für den Schutz von Fahrzeuginsassen mittels einer Vorrichtung nach einem der Ansprüche 1 bis 5, umfassend das Erfassen einer Beschleunigung des Fahrzeugs entlang einer ersten Achse mittels eines ersten Sensors, wobei diese erste Achse im wesentlichen parallel zu der Vorwärtsbewegungsrichtung des Fahrzeugs ist, Erfassen mittels eines zweiten Sensors die Beschleunigung des Fahrzeugs entlang einer zweiten, in bezug zu der ersten Achse geneigten Achse und analoge Auswertung des Signals des ersten longitudinalen Beschleunigungssensors auf analoge Weise, gekennzeichnet durch eine digitale Bewertung der Signale des ersten und des zweiten Sensors, wobei die Auslösung des Sicherheitssystems in gemeinsamer Abhängigkeit von den Werten der analog und digital ausgewerteten Signale erfolgt.

## Revendications

1. Dispositif de mise en oeuvre d'un système de sécurité pour protéger l'occupant d'un véhicule, dispositif comprenant un premier détecteur d'accélération (10) pour détecter l'accélération du véhicule suivant un premier axe, un second capteur (12) pour détecter l'accélération du véhicule le long d'un axe incliné par rapport au premier axe et un circuit d'évaluation analogique (14) pour évaluer le signal du premier détecteur d'accélération longitudinale (10) d'une manière analogique, dispositif caractérisé par un ordinateur numérique (24) pour évaluer le signal du premier détecteur d'accélération longitudinale (10) et celui du second détecteur d'accélération transversale (12), de façon numérique, le système de sécurité étant commandé en fonction de la valeur du signal analogigue généré comme sortie du circuit d'évaluation analogigue (14), le calcul numérique influençant le procédé d'évaluation du calcul analogique dans le circuit d'évaluation analogique (14) pour actionner le système de sécurité, même si la valeur de l'accélération longitudinale n'est pas suffisante en elle-même pour mettre en oeuvre le dispositif de sécurité.

2. Dispositif de mise en oeuvre d'un système de sécurité pour la protection de l'occupant d'un véhicule, comprenant un premier détecteur d'accélération (10) pour détecter l'accélération du véhicule sur un premier axe, un second détecteur (12) pour détecter l'accélération du véhicule le long d'un axe incliné par rapport au premier axe et un circuit d'évaluation analogique (30) pour évaluer le signal du premier détecteur d'accélération longitudinale (10) d'une façon analogique et créer un signal de sortie analogique pour mettre en oeuvre le système de sécurité, dispositif caractérisé en ce qu'en plus il comporte un premier ordinateur numérique (32) pour évaluer également le signal du premier détecteur longitudinal (10) sous forme numérique et créer un signal de sortie numérique, un commutateur à seuil (dV) relié aux sorties du circuit d'évaluation analogique (30) et du premier ordinateur (32), le système de sécurité étant également actionné si le signal numérique ou analogique, évalué dans le circuit analogique (30) avec l'influence du calcul numérique du premier ordinateur (32) atteint un seuil d'accélération fixé par le commutateur de seuil (dV).

3. Dispositif de mise en oeuvre d'un système de sécurité selon la revendication 2, caractérisé en ce que le système de sécurité est mis en oeuvre en fonction du signal du détecteur d'accélération transversale (12) et en fonction de la comparaison de l'accélération longitudinale et de l'accélération transversale par un second calculateur numérique (38) pour évaluer le signal du premier détecteur d'accélération longitudinale (10) et du second détecteur transversal (12), sous forme numérique même si la sortie du circuit d'évaluation analogique (30) est inférieure au seuil d'accélération du commutateur à seuil de mise en oeuvre (dV).

4. Dispositif selon l'une quelconque des revendications précédentes, caractérisé en ce que le signal d'accélération de chaque détecteur (10, 12) est appliqué aux moyens de calcul numérique (24, 32, 38) par l'intermédiaire d'au moins un filtre passe-bas (18, 20).

5. Dispositif selon l'une quelconque des revendications précédentes, caractérisé en ce que le premier et le second axe sont essentiellement perpendiculaires l'un à l'autre.

6. Procédé de mise en oeuvre de systèmes de sécurité pour la protection de l'occupant d'un véhicule, utilisant un dispositif selon l'une quelconque des revendications 1 à 5, consistant à détecter l'accélération du véhicule suivant un premier axe par un premier détecteur, cet axe étant pratiquement parallèle à la direction de circulation du véhicule, à détecter avec un second détecteur, l'accélération du véhicule suivant un second axe incliné par rapport au premier axe et à évaluer de façon analogique le signal du premier détecteur d'accélération longitudinale, en procédant de façon analogique, procédé caractérisé en ce qu'on évalue de manière numérique les signaux du premier et du second détecteur, le système de sécurité étant mis en oeuvre de façon combinée selon les valeurs des signaux analogiques et numériques, tels qu'ils sont évalués.
